# EUROPÄISCHE PATENTSCHRIFT

(11) **EP 3 011 220 B1**
(45) Veröffentlichungstag und Bekanntmachung des Hinweises auf die Patenterteilung: **30.08.2017**
(21) Anmeldenummer: 15727416.8
(22) Anmeldetag: 09.06.2015
(51) Int. Cl.: F16L 1/036, F16L 57/06, F16L 21/02

(54) **SYSTEM UND VERFAHREN ZUM VORTREIBEN EINES ROHRVERBUNDS**
SYSTEM AND METHOD FOR ADVANCING A PIPE ASSEMBLY
SYSTÈME ET PROCÉDÉ POUR AVANCER UN ENSEMBLE DE TUYAU

(30) Priorität: 11.07.2014 DE 102014109799
(43) Veröffentlichungstag der Anmeldung: 27.04.2016
(73) Patentinhaber: HOBAS Pipes International GmbH, 9020 Klagenurt (AT)
(72) Erfinder: SIMONER, Thomas, 9063 Maria Saal (AT)
(74) Vertreter: Schweiger, Johannes
(86) Internationale Anmeldenummer: PCT/EP2015/062803
(87) Internationale Veröffentlichungsnummer: WO 2016/005128

(56) Entgegenhaltungen:
- WO-A1-2008/136761
- DE-A1- 2 706 649
- GB-A- 1 182 856
- GB-A- 1 293 371
- GB-A- 2 478 665
- US-A- 1 633 798
- US-A- 3 829 136

## Beschreibung

Die vorliegende Erfindung betrifft ein System gemäß dem Oberbegriff des Anspruchs 1 sowie ein Verfahren gemäß dem Oberbegriff des Anspruchs 11.

Rohrkupplungen sind beispielsweise in der DE 27 44 739 A1 und der US 4 174 125 A sowie in der EP 1 102 943 B1 beschrieben, wobei in Bezug auf den grundsätzlichen Aufbau einer Rohrkupplung und ihre Verwendung auf die vorgenannten Druckschriften Bezug genommen wird. Weitere Druckschriften zum Stand der Technik sind: US3829136A, US1633798A GB1182856A, GB1293371A, GB2478665A und DE2706649.

Zum Vortreiben der Rohrleitungen wird herkömmlicherweise ein Gleitmittel, wie zum Beispiel Bentonit, auf die Außenwand der Rohrleitungen aufgebracht, so dass die Rohrleitungen besser in einen Tunnel oder Ähnliches eingeschoben werden können. Dazu wird in die Wandung der Rohrleitung eine Öffnung eingebracht, durch welche von innerhalb der Rohrleitungen das Gleitmittel auf die Außenwand der Rohrleitungen injiziert werden kann. Diese Öffnung in der Wandung schwächt jedoch nachteiligerweise die Struktur der Rohrleitung, so dass erhebliche Stabilitäts- und Festigkeitsprobleme, vor allem gegenüber dem Innendruck im Betrieb der Rohrleitung, auftreten können.

Der nächstliegende Stand der Technik ist in der WO2008/136761A1 gezeigt.

Es ist daher die Aufgabe der vorliegenden Erfindung, ein System und ein Verfahren zum Vortreiben eines Rohrverbunds durch einen Tunnel zur Verfügung zu stellen, die die Nachteile des Stands der Technik beseitigen und insbesondere eine verbesserte Stabilität und Festigkeit der Rohrleitungen, insbesondere gegenüber dem Innendruck im Betrieb, ermöglichen.

Diese Aufgabe wird mit dem Gegenstand der Ansprüche 1 und 11 gelöst. Außerdem wird die Aufgabe mit dem System gemäß den weiteren nebengeordneten Ansprüchen gelöst. Vorteilhafte den Ausgestaltungen und Weiterbildungen der Erfindung sind den Unteransprüchen, sowie der Beschreibung unter Bezugnahme auf die Zeichnungen entnehmbar.

Der Grundgedanke der vorliegenden Erfindung besteht darin, dass der mindestens eine Injektionsauslass, direkt, in der Rohrkupplung selbst angeordnet ist und nicht in die Wandung der Rohrleitungen eingebracht werden muss. Es muss daher keine Öffnung für den mindestens einen Injektionsauslass in die Rohrleitungen selbst eingebracht werden. Dadurch werden die Wandungen der Rohrleitungen nicht beeinträchtigt, so dass deren Struktur beibehalten werden kann bzw. nicht zusätzlich verstärkt werden muss, was zur Überdimensionierung führen kann. Die Festigkeit und Stabilität der Rohrleitungen sind daher vergleichsweise hoch, so dass die Rohrleitungen auch hohen Belastungen standhalten können und insbesondere eine hohe Druckbeständigkeit im Betrieb aufweisen. Dadurch kann auch erreicht werden, dass die Wandungen der Rohrleitungen vergleichsweise dünn gehalten und die Durchmesser der Rohrleitungen vergleichsweise klein ausgebildet werden können. Das Gleitmittel ist derart ausgebildet, dass es ein Vortreiben der Rohrleitungen ermöglicht, insbesondere ist das Gleitmittel Bentonit. Das Gleitmittel vermindert die Reibung zwischen der Rohrleitung und dem Erdreich. Neben dem Schutz der Rohrwandung ist so auch eine geringere Vortriebskraft für das Vortreiben erreichbar bzw. erforderlich. Das Gleitmittel wird durch den mindestens einen Injektionsauslass derart injiziert, dass es auf die Rohrkupplung und/oder die Rohrleitungen aufgebracht werden kann und ein Vorschieben (Vortreiben) der Rohrkupplung und/oder der Rohrleitungen in den Schacht oder Ähnliches ermöglicht.

Die Rohrkupplung und die Rohrleitungen weisen Wandungen auf, die insbesondere einen kreisringförmigen Querschnitt aufweisen können. Insbesondere sind die Rohrkupplung und/oder die Rohrleitungen im Wesentlichen als hohle Kreiszylinder ausgebildet. Die Wandungen weisen eine Innenseite und eine Außenseite auf. Insbesondere kann die Rohrkupplung mit der Rohrleitung außenbündig abschließen.

Es ist vorgesehen, dass der mindestens eine Injektionsauslass das Gleitmittel auf die Außenseite der Wandung der Rohrkupplung und/oder der Rohrleitungen aufbringt, so dass eine besonders gute Gleitfähigkeit erreicht werden kann und die benötigte Vortriebskraft verringert werden kann.

Bei den Rohrleitungen handelt es sich grundsätzlich um jegliche Art von Rohrleitung und insbesondere um Abwasserleitungen und/oder Trinkwasserleitungen, mit einem Durchmesser von mehr als 2 m, mehr als 3 m, mehr als 4 m, mehr als 5 m oder mehr als 6 m. Die Rohrleitungen sind bevorzugt aus GFK gefertigt, wodurch eine besonders gute Festigkeit insbesondere bei geringerem Gewicht und/oder kleinerem Rohraußendurchmesser erreicht werden kann.

Es ist bevorzugt, dass der mindestens eine Injektionsauslass auf der Innenseite der Wandung der Rohrkupplung an eine Gleitmittelversorgung angeschlossen wird. In diesem Fall strömt das Gleitmittel von innen nach außen (von der Innenseite der Wandung zur Außenseite der Wandung der Rohrkupplung) durch den mindestens einen Injektionsauslass und tritt an der Außenseite der Wandung der Rohrkupplung aus dem mindestens einen Injektionsauslass aus. Und tritt an der Außenwandung der Rohrkupplung aus dem Injektionsauslass aus. Das Gleitmittel wird bevorzugt in einer Schlauchleitung beginnend im Startschacht einer Vorpressstation zur jeweiligen Rohrkupplung bzw. zum jeweiligen Injektionsauslass befördert

Die Rohrkupplung kann insbesondere derart ausgebildet sein, dass sie rohrförmig, mit anderen Worten ringförmig, ausgebildet ist und sich entlang ihrer Längsachse erstreckt, wobei die Rohrkupplung insbesondere rotationssymmetrisch zu ihrer Längsachse ausgebildet sein kann. Sie weist eine erste Stirnseite mit einer ersten Stirnfläche und eine zweite Stirnseite mit einer zweiten Stirnfläche auf, wobei insbesondere die erste Stirnfläche parallel zur zweiten Stirnfläche angeordnet ist. Mit der ersten Seite nimmt die Rohrkupplung eine erste Rohrleitung auf und mit der zweiten Seite nimmt die Rohrkupplung eine zweite Rohrleitung auf. Durch geeignete und aus dem Stand der Technik bekannte Verbindungsmittel werden die Rohrleitungen fest und abdichtend mit der Rohrkupplung verbunden.

Die Rohrkupplung ist aus einem ausreichend festen Material gefertigt, so dass die Belastungen aufgenommen werden können. Die Rohrkupplung kann insbesondere aus glasfaserverstärktem Kunststoff (GFK) gefertigt sein. Bevorzugt ist es vorgesehen, dass die Rohrkupplung aus Stahl, insbesondere aus Edelstahl, gefertigt ist.

Die Rohrkupplung weist mindestens einen Injektionsauslass auf. Bevorzugt weist die Rohrkupplung mindestens zwei Injektionsauslässe auf, besonders bevorzugt weist die Rohrkupplung mindestens drei Injektionsauslässe auf. Bei mehreren Injektionsauslässen kann vorteilhaft eine bessere Verteilung des Gleitmittels erfolgen.

Der mindestens eine Injektionsauslass erstreckt sich insbesondere entlang einer Längsachse und ist bevorzugt, zumindest teilweise, rotationssymmetrisch zu seiner Längsachse ausgebildet. Der mindestens eine Injektionsauslass weist eine Einlassöffnung zum Einbringen des Gleitmittels und eine Auslassöffnung zum Ausbringen des Gleitmittels auf. Bevorzugt ist die Einlassöffnung auf der Innenseite der Wandung der Rohrkupplung angeordnet. Der mindestens eine Injektionsauslass ist derart ausgebildet, dass eine Gleitmittelversorgung an die Einlassöffnung angeschlossen werden kann. Das Gleitmittel strömt von der Gleitmittelversorgung kommend durch die Einlassöffnung in den Injektionsauslass hinein. Das Gleitmittel durchströmt ein Durchflussrohr, das bevorzugt als hohler Kreiszylinder ausgebildet ist, des Injektionsauslasses und tritt an der Auslassöffnung, die sich bevorzugt an der Außenseite der Wandung der Rohrkupplung befindet und besonders bevorzugt bündig mit der Außenseite der Wandung abschließt, aus dem mindestens einen Injektionsauslass heraus.

Es ist bevorzugt, dass der mindestens eine Injektionsauslass zumindest bereichsweise ein Innengewinde aufweist, in das zum Beispiel ein Verschlussstück und/oder eine Versorgungsleitung der Gleitmittelversorgung eingeschraubt werden kann.

Gemäß einer bevorzugten Weiterbildung ist es vorgesehen, dass der mindestens eine Injektionsauslass, insbesondere in Bezug auf die Längsachse der Rohrkupplung mittig, in der Wandung der Rohrkupplung angeordnet ist. Dadurch kann vorteilhaft eine besonders gute Verteilung des Gleitmittels erfolgen.

Gemäß einer anderen bevorzugten Weiterbildung ist es vorgesehen, dass der mindestens eine Injektionsauslass in eine Öffnung in der Wandung der Rohrkupplung abdichtend eingebracht ist, insbesondere abdichtend eingeschweißt und/oder abdichtend einlaminiert ist. Durch die Abdichtung wird vorteilhaft erreicht, dass das Gleitmittel nicht in das Innere der Rohrkupplung eindringen kann. Das Schweißen eignet sich insbesondere, falls die Rohrkupplung aus einem Metall wie zum Beispiel Stahl, insbesondere Edelstahl, gefertigt ist. Das Einlaminieren eignet sich insbesondere, falls die Rohrkupplung aus einem Kunststoffmaterial wie zum Beispiel GFK gefertigt ist.

Gemäß einer anderen bevorzugten Weiterbildung ist es vorgesehen, dass der mindestens eine Injektionsauslass bündig mit der Außenseite der Wandung der Rohrkupplung abschließt. Dadurch ist es vorteilhaft möglich, dass verhindert wird, dass der mindestens eine Injektionsauslass beim Vortreiben der Rohrkupplung die Vorwärtsbewegung behindert.

Gemäß einer anderen bevorzugten Weiterbildung ist es vorgesehen, dass der mindestens eine Injektionsauslass ein Verschlussstück zum Verschließen der Öffnung des Injektionsauslasses aufweist, welches zur Injektion des Gleitmittels entfernbar ist, um die Öffnung des Injektionsauslasses freizugeben. Durch das Verschlussstück ist vorteilhaft erreichbar, dass das Gleitmittel nicht von außen in das Innere der Rohrkupplung gelangen kann. Außerdem gewährleistet das Verschlussstück im späteren Betrieb die Dichtigkeit der Rohrleitung, insbesondere bei Druckanwendungen. Das Verschlussstück kann bevorzugt mit einem Schraubgewinde, insbesondere mit einem Außengewinde, ausgestattet sein, so dass es zum Verschließen in die Öffnung des Injektionsauslasses eingeschraubt und zum Öffnen aus der Öffnung herausgeschraubt werden kann. Dazu kann besonders bevorzugt die Öffnung ein Innengewinde aufweisen, welches zum Einschrauben des Verschlussstücks ausgebildet ist. Diese Schraubverbindung ermöglicht vorteilhaft eine besonders einfache Handhabung des Injektionsauslasses zum Injizieren des Gleitmittels. Es ist weiterhin bevorzugt vorgesehen, dass das Verschlussstück stirnseitig eine Ausnehmung, bevorzugt mit einer sechskantförmigen Ausbildung, aufweist, die zur Aufnahme eines Werkzeugs, zum Beispiel eines Sechskantschlüssels, zum Lösen und/oder zum Befestigen des Verschlussstücks ausgebildet ist.

Gemäß einer anderen bevorzugten Weiterbildung ist es vorgesehen, dass sich der mindestens eine Injektionsauslass mit seiner Längsachse senkrecht zum benachbarten Bereich der Wandung der Rohrkupplung erstreckt. Dadurch ist vorteilhaft erstens eine besonders einfache Anbringung des mindestens einen Injektionsauslasses an der Wandung und zweitens ein besonders einfaches Anschließen der Gleitmittelversorgung möglich.

Gemäß einer anderen bevorzugten Weiterbildung ist vorgesehen, dass der mindestens eine Injektionsauslass mindestens ein Dichtmittel aufweist, welches den Innenraum des mindestens einen Injektionsauslasses vom Innenraum der Rohrkupplung abdichtet. Dadurch kann vorteilhaft erreicht werden, dass das Gleitmittel nicht in den Innenraum der Rohrkupplung gelangen kann. Das mindestens eine Dichtmittel kann bevorzugt als Dichtring, insbesondere aus einem Gummimaterial, ausgebildet sein, der im Bereich der Einlassöffnung des Injektionsauslasses angeordnet ist und besonders bevorzugt mit dem Verschlussstück abdichtend zusammenwirkt.

Gemäß einer anderen bevorzugten Weiterbildung ist es vorgesehen, dass der mindestens eine Injektionsauslass zumindest bereichsweise ein Außengewinde aufweist. Auf dieses Außengewinde können zum Beispiel ein weiteres Dichtmittel und/oder die Gleitmittelversorgung aufgeschraubt werden. Besonders bevorzugt ist es vorgesehen, dass das Außengewinde auf der Außenseite des Durchflussrohrs angeordnet ist.

Besonders bevorzugt ist es, dass der mindestens eine Injektionsauslass eine Mutter, bevorzugt zumindest bereichsweise mit einem Außensechskant versehen, aufweist, die derart ausgebildet ist, dass die Mutter auf das Außengewinde des mindestens einen Injektionsauslasses aufgeschraubt werden kann. Weiterhin ist es bevorzugt, dass die Mutter derart mit einem weiteren Dichtring zusammenwirkt, dass der Raum zwischen der Mutter und dem Durchflussrohr abgedichtet werden kann. Besonders bevorzugt ist es vorgesehen, dass die Mutter derart mit dem weiteren Dichtring zusammenwirkt, dass der Raum zwischen der Mutter und der Innenseite der Wandung der Rohrkupplung abgedichtet werden kann. Dazu kann die Rohrkupplung an der Innenseite ihrer Wandung einen entsprechenden, insbesondere kreisförmigen, vorstehenden Bereich aufweisen, der mit dem weiteren Dichtring der Mutter abdichtend zusammenwirkt.

Gemäß einer anderen bevorzugten Weiterbildung ist es vorgesehen, dass die Rohrkupplung zwei oder mehr, bevorzugt drei oder mehr Injektionsauslässe aufweist, die äquidistant voneinander beabstandet über den Umfang der Rohrkupplung verteilt angeordnet sind. Dadurch ist vorteilhaft eine besonders gute Verteilung des Gleitmittels möglich.

Es ist insbesondere bevorzugt, dass die Rohrleitung stirnseitig mindestens eine Ausnehmung aufweist, die derart ausgebildet ist, dass sie den mindestens einen Injektionsauslass der Rohrkupplung zumindest teilweise aufnehmen kann. Dadurch ist es vorteilhaft möglich, die Rohrleitung optimal an der Rohrkupplung zu befestigen. Darüber hinaus kann dadurch ermöglicht werden, dass sich die beiden Rohrleitungen im verbundenen Zustand stirnseitig berühren können, indem sie zwischen sich in der mindestens einen Ausnehmung den mindestens einen Injektionsauslass aufnehmen. Es ist weiterhin bevorzugt, dass die Rohrleitung stirnseitig genauso viele Ausnehmungen aufweist, wie Injektionsauslässe an der Rohrkupplung angeordnet sind. In einer bevorzugten Ausführungsform ist die mindestens eine Ausnehmung halbkreisförmig ausgebildet. Dann kann vorteilhaft zum Beispiel ein kreiszylinderförmiger Injektionsauslass zumindest teilweise aufgenommen werden.

In einer alternativen Ausführungsform weist die Rohrleitung stirnseitig keine Ausnehmung zur Aufnahme des mindestens einen Injektionsauslasses auf. Stattdessen weist die Rohrkupplung einen Einlegering auf, der im Inneren der Rohrkupplung, insbesondere in der Mitte der Rohrkupplung, zwischen den Stirnseiten der Rohrleitungen angeordnet ist, wobei die Rohrleitungen stirnseitig von beiden Seiten an den Einlegering anschließen. In dem Einlegering ist der mindestens eine Injektionsauslass zumindest teilweise angeordnet. Insbesondere grenzen die Stirnseiten der Rohrleitungen an bzw. sie berühren die beiden Stirnseiten des Einlegerings. Der Einlegering schließt nach innen hin bündig mit den Innenwandungen der Rohrleitungen ab. Der Einlegering hat den Vorteil, dass in die Rohrleitungen keine Ausnehmungen eingebracht werden müssen.

Ein anderer Gegenstand der vorliegenden Erfindung betrifft ein Verfahren zum Injizieren von Gleitmittel auf eine Rohrleitung, die mit einer Rohrkupplung nach einer der vorherigen Ausführungsformen verbunden ist, wobei das Gleitmittel durch den in der Rohrkupplung befindlichen Injektionsauslass auf die Rohrleitung injiziert (aufgebracht) wird. Im Übrigen wird auf die obigen Ausführungen verwiesen. Bevorzugt wird das Gleitmittel durch den Injektionsauslass auf die Außenseite der Wandung der Rohrleitung aufgebracht. Bei einer Herstellung der Rohrkupplung eines Systems gemäß Anspruch 1 wird mindestens eine Öffnung in die Wandung der Rohrkupplung eingebracht und danach wird der mindestens eine Injektionsauslass abdichtend in der Öffnung befestigt. Es ist bevorzugt, dass der mindestens eine Injektionsauslass in der Öffnung abdichtend festgeschweißt und/oder abdichtend einlaminiert wird. Im Übrigen wird auf die obigen Ausführungen verwiesen.

Weitere Ausführungsbeispiele der vorliegenden Erfindung sind in den Zeichnungen dargestellt und in der nachfolgenden Beschreibung näher erläutert.

### Kurze Beschreibung der Zeichnungen

### Es zeigen

Figuren 1 bis 4 schematisch eine Rohrkupplung eines Systems gemäß einer beispielhaften Ausführungsform der vorliegenden Erfindung,
Figuren 5 bis 8 einen Rohrverbund eines Systems gemäß einer beispielhaften Ausführungsform der vorliegenden Erfindung und
Figuren 9 bis 12 schematisch einen Rohrverbund eines Systems gemäß einer weiteren beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

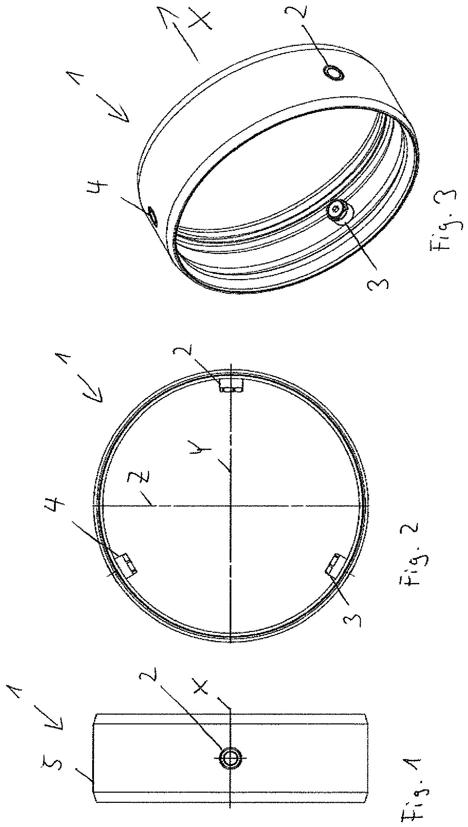

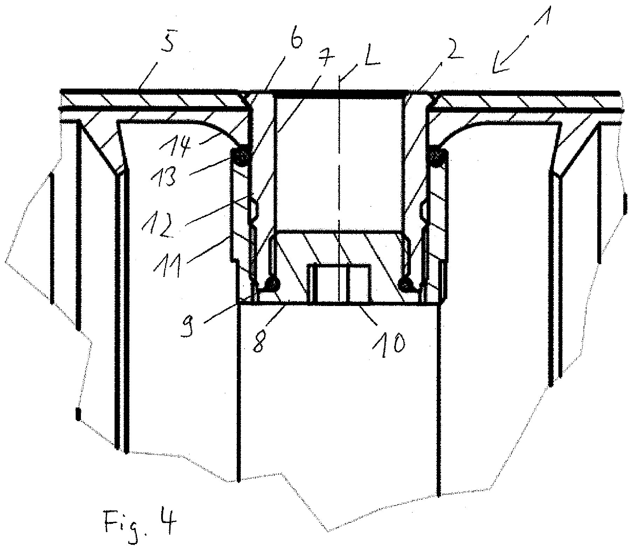

Die Figuren 1 bis 4 zeigen schematisch eine Rohrkupplung 1 eines Systems gemäß einer beispielhaften Ausführungsform der vorliegenden Erfindung. Figur 1 zeigt die Rohrkupplung 1 in einer Seitenansicht. Figur 2 zeigt die Rohrkupplung 1 in einer Draufsicht. Figur 3 zeigt die Rohrkupplung 1 in einer perspektivischen Ansicht. Figur 4 zeigt einen vergrößerten Ausschnitt der Rohrkupplung 1.

Die Rohrkupplung 1 kann aus Stahl, insbesondere Edelstahl, oder GFK gefertigt sein. Die Rohrkupplung 1 ist kreisringförmig ausgebildet und erstreckt sich entlang ihrer Längsachse X, ihrer zur Längsachse X senkrechten Breitenrichtung Y und ihrer zur Längsachse X und zur Breitenrichtung Y senkrechten Höhenrichtung Z. Die Rohrkupplung 1 weist in dieser Ausführungsform drei Injektionsauslässe 2, 3, 4 auf. Die Rohrkupplung 1 weist dementsprechend drei Öffnungen in ihrer Wandung 5 auf, in denen die Injektionsauslässe 2, 3, 4 zum Beispiel durch Schweißen und/oder Laminieren befestigt sind.

Die Injektionsauslässe 2, 3, 4 sind äquidistant zueinander gleichmäßig über den Umfang der Rohrkupplung 1 verteilt. Die Rohrkupplung 1 ist zumindest bereichsweise rotationssymmetrisch zu ihrer Längsachse X ausgebildet. Wie in der vergrößerten Schnittansicht in der Figur 4 zu sehen ist, weist der Injektionsauslass 2 ein Durchflussrohr 6 auf, das mit der Wandung 5 durch Schweißen und/oder Laminieren abdichtend verbunden ist. Das Durchflussrohr 6 erstreckt sich mit seiner Längsachse L senkrecht zur Oberfläche der Wandung 5. Das Durchflussrohr 6 ist als Hohlzylinder und rotationssymmetrisch zu seiner Längsachse L ausgebildet. Das Durchflussrohr 6 schließt bündig mit der äußeren Oberfläche (Außenseite) der Wandung 5 ab. Durch das Durchflussrohr 6 hindurch erstreckt sich durchgängig entlang der Längsachse L eine Durchgangsöffnung, durch die im Betrieb ein Gleitmittel strömen kann.

In dieser beispielhaften Ausführungsform weist das Durchflussrohr 6 ein Innengewinde 7 auf. In dieses Innengewinde 7 ist ein mit einem entsprechenden Außengewinde versehenes Verschlussstück 8 eingeschraubt. Dadurch wird die Durchgangsöffnung verschlossen, so dass kein Gleitmittel durch die Durchgangsöffnung strömen kann. Ein Dichtring 9 dichtet den Raum zwischen dem Durchflussrohr 6 und dem Verschlussstück 8 ab.

Stirnseitig weist das Verschlussstück 8 eine Ausnehmung 10 auf, die innensechskantförmig ausgebildet ist, so dass die Ausnehmung ein Werkzeug aufnehmen kann, um das Verschlussstück 8 in das Durchflussohr 6 einzuschrauben oder vom Durchflussrohr 6 abzuschrauben.

Das Durchflussrohr 6 weist in dieser beispielhaften Ausführungsform ein Außengewinde 12 auf, auf welches eine Mutter 11 mit einem entsprechenden Innengewinde aufgeschraubt werden kann. Stirnseitig schließt die Mutter 11 bündig mit dem Verschlussstück 8 ab. Auf der anderen Stirnseite der Mutter 11 ist in einer Ausnehmung der Mutter 11 ein weiterer Dichtring 13 angeordnet, der im aufgeschraubten Zustand mit einem vorstehenden Bereich 14 der Wandung 5 abdichtend abschließt.

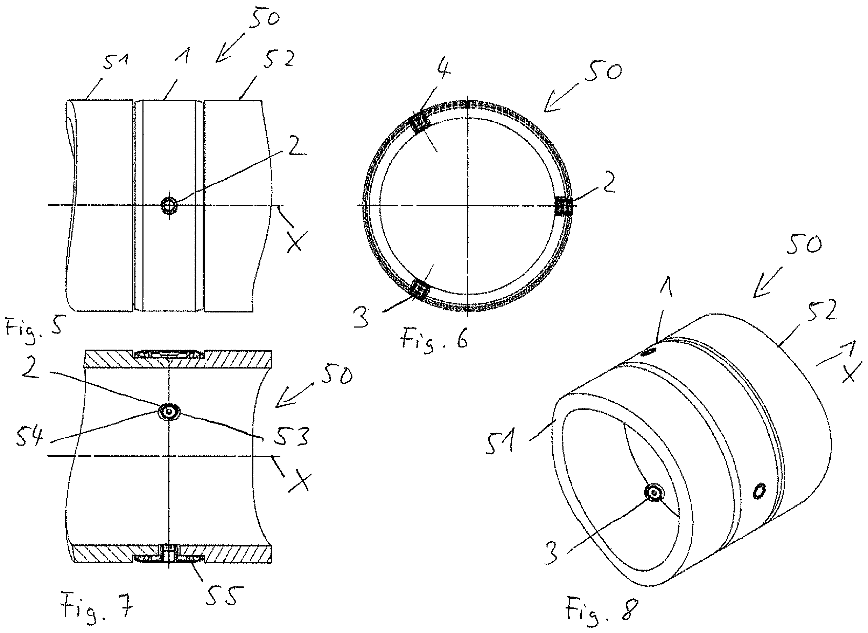

Figuren 5, 6, 7 und 8 zeigen schematisch einen Ausschnitt eines Rohrverbunds 50 gemäß einer beispielhaften Ausführungsform der vorliegenden Erfindung. Der Rohrverbund 50 weist eine erste Rohrleitung 51 und eine zweite Rohrleitung 52 auf, die über eine erfindungsgemäße Rohrkupplung 1, wie sie zum Beispiel in den Figuren 1 bis 4 beschrieben ist, miteinander verbunden sind.

Die Rohrkupplung 1 weist drei Injektionsauslässe 2, 3, 4 auf, die äquidistant über den Umfang der Rohrkupplung 1 angeordnet sind. Figur 6 zeigt einen Querschnitt durch den Rohrverbund 50 auf Ebene der Injektionsauslässe 2, 3, 4. Figur 7 zeigt einen Längsschnitt entlang der Längsachse X durch den Rohrverbund 50. Figur 8 zeigt eine perspektivische Ansicht. Die Rohrleitungen 51, 52 sind über Verbindungsmittel 55 mit der Rohrkupplung 1 verbunden. In dieser beispielhaften Ausführungsform weisen beide Rohrleitungen 51, 52 stirnseitig für jeden der drei Injektionsauslässe 2, 3, 4 eine Ausnehmung 53, 54 auf, die im verbundenen Zustand die Injektionsauslässe 2, 3, 4 zwischen sich aufnehmen. Dazu berühren sich die beiden Rohrleitungen 51, 52 stirnseitig. Im Übrigen wird auf die Ausführungen zu den Figuren 1 bis 4 verwiesen.

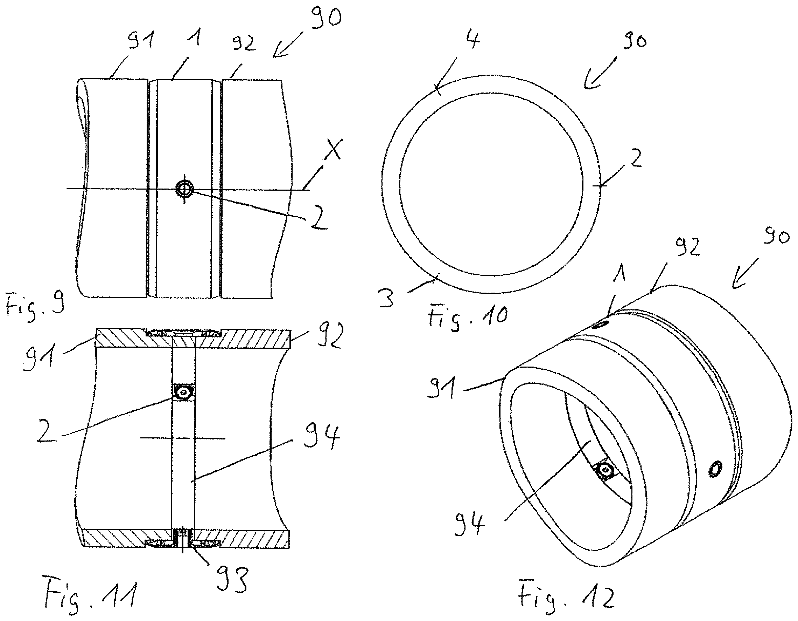

Figuren 9, 10, 11, 12 zeigen schematisch einen Ausschnitt eines Rohrverbunds 90 eines Systems gemäß einer weiteren beispielhaften Ausführungsform. Figur 9 zeigt den Rohrverbund 90 in einer Seitenansicht. Figur 10 zeigt den Rohrverbund 90 in einem Querschnitt auf Ebene der Injektionsauslässe 2, 3, 4. Figur 11 zeigt den Rohrverbund 90 in einer Schnittansicht entlang der Längsachse X. Figur 12 zeigt den Rohrverbund 90 in einer perspektivischen Ansicht. Grundsätzlich wird auf die Ausführungen zum Rohrverbund 50 aus den Figuren 5 bis 8 verwiesen. Die beiden Rohrleitungen 91, 92 sind über eine Rohrkupplung 1, zum Beispiel wie in den Figuren 1 bis 4 beschrieben, verbunden. Im Gegensatz zur Ausführungsform aus den Figuren 5 bis 8 berühren sich die beiden Rohrleitungen 91, 92 im verbundenen Zustand nicht stirnseitig und die Rohrleitungen 91, 92 weisen daher keine Ausnehmung im stirnseitig auf. Zwischen den Stirnseiten der Rohrleitungen 91, 92 befindet sich ein Einlegering 94, der innerhalb der Rohrkupplung 1 angeordnet ist. In dem Einlegering 94 sind die Injektionsauslässe 2, 3, 4 zumindest teilweise angeordnet. Die Stirnseiten der Rohrleitungen 91, 92 grenzen an bzw. berühren die beiden Stirnseiten des Einlegerings 94. Der Einlegering 94 schließt nach innen hin bündig mit den Innenwandungen der Rohrleitungen 91, 92 ab. Im Übrigen wird auf die obigen Ausführungen verwiesen.

### Rohrkupplung

### Bezugszeichenliste

- 1: Rohrkupplung
- 2, 3, 4: Injektionsauslass
- 5: Wandung
- 6: Durchflussrohr
- 7: Innengewinde
- 8: Verschlussstück
- 9: Dichtring
- 10: Ausnehmung
- 11: Mutter
- 12: Außengewinde
- 13: Dichtring
- 14: vorstehender Bereich
- 50: Rohrverbund
- 51, 52: Rohrleitung
- 53, 54: Ausnehmung
- 55: Verbindungsmittel
- 90: Rohrverbund
- 91, 92: Rohrleitung
- 93: Verbindungsmittel
- 94: Einlegering
- X: Längsachse der Rohrkupplung
- Y: Breitenachse
- Z: Höhenachse
- L: Längsachse des Injektionsauslasses

## Patentansprüche

1. System zum Vortreiben eines Rohrverbunds durch einen Tunnel, wobei das System den Rohrverbund aufweist, wobei der Rohrverbund (50, 90) eine erste Rohrleitung (51, 91), eine zweite Rohrleitung (52, 92) und eine Rohrkupplung (1) aufweist, wobei die erste Rohrleitung (51, 91) über die Rohrkupplung (1) mit der zweiten Rohrleitung (52, 92) verbunden ist, **dadurch gekennzeichnet, dass** die Rohrkupplung (1) mindestens einen Injektionsauslass (2, 3, 4) zum Injizieren von Gleitmittel aufweist, wobei das Gleitmittel derart injizierbar ist, dass es auf die Rohrkupplung (1) und/oder die Rohrleitungen (51, 52, 91, 92) aufgebracht werden kann, und wobei der eine Injektionsauslass (2, 3, 4) das Gleitmittel auf die Außenseite der Wandung der Rohrkupplung und/oder der Rohrleitung aufbringt.

2. System nach Anspruch 1, **dadurch gekennzeichnet, dass** der mindestens eine Injektionsauslass (2, 3, 4), insbesondere in Bezug auf die Längsachse (X) der Rohrkupplung (1) mittig, in der Wandung (5) der Rohrkupplung (1) angeordnet ist.

3. System nach einem der vorhergehenden Ansprüche, **dadurch gekennzeichnet, dass** der mindestens eine Injektionsauslass (2, 3, 4) in eine Öffnung in der Wandung (5) der Rohrkupplung (1) abdichtend eingebracht, bevorzugt abdichtend eingeschweißt und/oder abdichtend einlaminiert ist.

4. System nach einem der vorhergehenden Ansprüche, **dadurch gekennzeichnet, dass** der mindestens eine Injektionsauslass (2, 3, 4) bündig mit der Außenseite der Wandung (5) der Rohrkupplung (1) abschließt.

5. System nach einem der vorhergehenden Ansprüche, **dadurch gekennzeichnet, dass** der mindestens eine Injektionsauslass (2, 3, 4) ein Verschlussstück (8) zum Verschließen der Öffnung des Injektionsauslasses (2, 3, 4) aufweist, welches zur Injektion des Gleitmittels entfernbar ist, um die Öffnung des Injektionsauslasses (2, 3, 4) freizugeben.

6. System nach einem der vorhergehenden Ansprüche, **dadurch gekennzeichnet, dass** sich der mindestens eine Injektionsauslass (2, 3, 4) mit seiner Längsachse (L) senkrecht zum benachbarten Bereich der Wandung (5) der Rohrkupplung (1) erstreckt.

7. System nach einem der vorhergehenden Ansprüche, **dadurch gekennzeichnet, dass** der mindestens eine Injektionsauslass (2, 3, 4) mindestens ein Dichtmittel (9, 13) aufweist, welches den Innenraum des mindestens einen Injektionsauslasses (2, 3, 4) vom Innenraum der Rohrkupplung (1) abdichtet.

8. System nach einem der vorhergehenden Ansprüche, **dadurch gekennzeichnet, dass** die Rohrkupplung (1) zwei oder mehr Injektionsauslässe (2, 3, 4) aufweist, welche äquidistant voneinander beabstandet über den Umfang der Rohrkupplung (1) verteilt angeordnet sind.

9. System nach einem der vorhergehenden Ansprüche, **dadurch gekennzeichnet, dass** die Rohrkupplung (1) aus Stahl, insbesondere Edelstahl, gefertigt ist.

10. System nach einem der vorhergehenden Ansprüche wobei die Rohrkupplung (1) einen Einlegering (94) aufweist, der im Inneren der Rohrkupplung (1), insbesondere in der Mitte der Rohrkupplung (1), zwischen den Stirnseiten der Rohrleitungen (51, 52, 91, 92) angeordnet werden kann, wobei die Rohrleitungen (51, 52, 91, 92) stirnseitig von beiden Seiten an den Einlegering (94) anschließen, wobei in dem Einlegering (94) der mindestens eine Injektionsauslass (2, 3, 4) zumindest teilweise angeordnet ist.

11. Verfahren zum Vortreiben eines Rohrverbunds durch einen Tunnel, wobei der Rohrverbund (50, 90) eine erste Rohrleitung (51, 91), eine zweite Rohrleitung (52, 92) und eine Rohrkupplung (1) aufweist, wobei die erste Rohrleitung (51, 91) über die Rohrkupplung (1) mit der zweiten Rohrleitung (52, 92) verbunden ist, **dadurch gekennzeichnet, dass** die Rohrkupplung (1) mindestens einen Injektionsauslass (2, 3, 4) zum Injizieren von Gleitmittel aufweist, wobei das Gleitmittel derart injizierbar ist, dass es auf die Rohrkupplung (1) und/oder die Rohrleitungen (51, 52, 91, 92) aufgebracht werden kann, und wobei der einen Injektionsauslass (2, 3, 4) das Gleitmittel auf die Außenseite der Wandung der Rohrkupplung und/oder der Rohrleitung aufbringt.

## Claims

1. System for jacking a pipe coupling through a tunnel, wherein the system comprises the pipe coupling, wherein the pipe coupling (50, 90) has a first pipe (51, 91), a second pipe (52, 92) and a pipe coupling (1), wherein the first pipe (51, 91) is connected with the second pipe (51, 52, 91, 92) via the pipe coupling (1), **characterized in that** the pipe coupling (1) comprises at least one injection outlet (2, 3, 4) for injecting lubricant, wherein the lubricant is injectable such that the same can be applied to the pipe coupling (1) and/or the pipes (51, 51, 91, 92), and wherein the injection outlet (2, 3, 4) applies the lubricant on the outer side of the wall of the pipe coupling and/or the pipe.

2. The system according to claim 1, **characterized in that** the at least one injection outlet (2, 3, 4) is disposed in the wall (5) of the pipe coupling (1), in particular centrally in relation to the longitudinal axis (X) of the pipe coupling (1).

3. The system according to any one of the preceding claims, **characterized in that** the at least one injection outlet (2, 3, 4) is sealingly introduced, preferably sealingly welded and/or sealingly laminated, into an opening in the wall (5) of the pipe coupling (1).

4. The system according to any one of the preceding claims, **characterized in that** the at least one injection outlet (2, 3, 4) ends flush with the outer side of the wall (5) of the pipe coupling (1).

5. The system according to any one of the preceding claims, **characterized in that** the at least one injection outlet (2, 3, 4) comprises a closure piece (8) for closing the opening of the injection outlet (2, 3, 4), which can be removed for injecting the lubricant so as to expose the opening of the injection outlet (2, 3, 4).

6. The system according to any one of the preceding claims, **characterized in that** the longitudinal axis (L) of the at least one injection outlet (2, 3, 4) extends perpendicularly to the adjacent region of the wall (5) of the pipe coupling (1).

7. The system according to any one of the preceding claims, **characterized in that** the at least one injection outlet (2, 3, 4) comprises at least one sealing means (9, 13), which seals the interior of the at least one injection outlet (2, 3, 4) from the interior of the pipe coupling (1).

8. The system according to any one of the preceding claims, **characterized in that** the pipe coupling (1) has two or more injection outlets (2, 3, 4), which are distributed across the circumference of the pipe coupling (1) spaced equidistantly apart from one another.

9. The system according to any one of the preceding claims, **characterized in that** the pipe coupling (1) is made of steel, and in particular stainless steel.

10. The system according to any one of the preceding claims, wherein the pipe coupling (1) comprises an insert ring (94), which can be disposed inside the pipe coupling (1), and in particular in the center of the pipe coupling (1), between the end faces of the pipes (51, 52, 91, 92), the pipes (51, 52, 91, 92) connecting to the insert ring (94) at the end faces from both sides, and the at least one injection outlet (2, 3, 4) being at least partially disposed in the insert ring (94).

11. A method for jacking a pipe coupling through a tunnel, wherein the system comprises the pipe coupling, wherein the pipe coupling (50, 90) has a first pipe (51, 91), a second pipe (52, 92) and a pipe coupling (1), wherein the first pipe (51, 91) is connected with the second pipe (51, 52, 91, 92) via the pipe coupling (1), **characterized in that** the pipe coupling (1) comprises at least one injection outlet (2, 3, 4) for injecting lubricant, wherein the lubricant is injectable such that the same can be applied to the pipe coupling (1) and/or the pipes (51, 51, 91, 92), and wherein the injection outlet (2, 3, 4) applies the lubricant on the outer side of the wall of the pipe coupling and/or the pipe.

## Revendications

1. Système destiné à faire avancer un assemblage de tubes à travers un tunnel, le système comportant l'assemblage de tubes,
l'assemblage de tubes (50, 90) comportant une première conduite (51, 91),
une deuxième conduite (52,92) et un raccord de tubes (1), la première conduite (51, 91) étant assemblée par l'intermédiaire du raccord de tubes (1) avec la deuxième conduite (52, 92),
**caractérisé en ce que**
le raccord de tubes (1) comporte au moins une sortie d'injection (2, 3, 4) pour injecter un lubrifiant, le lubrifiant étant injectable de sorte à pouvoir être appliqué sur le raccord de tubes (1) et/ou sur les conduites (51, 52, 91, 92) et l'une sortie d'injection (2, 3, 4) appliquant le lubrifiant sur la face extérieure de la paroi du raccord de tubes et/ou de la conduite.

2. Système selon la revendication 1, **caractérisé en ce que** l'au moins une sortie d'injection (2, 3, 4), est placée au centre dans la paroi (5) du raccord de tubes (1), notamment en rapport à l'axe longitudinal (X) du raccord de tubes (1).

3. Système selon l'une quelconque des revendications précédentes, **caractérisé en ce que** l'au moins une sortie d'injection (2, 3, 4) est introduite de marnière à assurer l'étanchéité, de préférence est soudée de manière à assurer l'étanchéité et/ou est laminée de manière à assurer l'étanchéité dans la paroi (5) du raccord de tubes (1).

4. Système selon l'une quelconque des revendications précédentes, **caractérisé en ce que** l'au moins une sortie d'injection (2, 3, 4) se termine à fleur de la face extérieure de la paroi (5) du raccord de tubes (1).

5. Système selon l'une quelconque des revendications précédentes, **caractérisé en ce que** l'au moins une sortie d'injection (2, 3, 4) comporte une pièce de fermeture (8) pour fermer l'orifice de la sortie d'injection (2, 3, 4), laquelle peut se retirer pour libérer l'orifice de la sortie d'injection (2, 3, 4).

6. Système selon l'une quelconque des revendications précédentes, **caractérisé en ce que** par son axe longitudinal (L), l'au moins une sortie d'injection (2, 3, 4) s'étend à la perpendiculaire de la zone voisine de la paroi (5) du raccord de tubes (1).

7. Système selon l'une quelconque des revendications précédentes, **caractérisé en ce que** l'au moins une sortie d'injection (2, 3, 4) comporte au moins un moyen d'étanchéité (9, 13), lequel assure l'étanchéité de l'espace intérieur de l'au moins une sortie d'injection (2, 3, 4) par rapport à l'espace intérieur du raccord de tubes (1).

8. Système selon l'une quelconque des revendications précédentes, **caractérisé en ce que** le raccord de tubes (1) comporte deux sorties d'injection (2, 3,4) ou plus, lesquelles sont placées à un écart équidistant en étant distribuées sur la périphérie du raccord de tubes (1).

9. Système selon l'une quelconque des revendications précédentes, **caractérisé en ce que** le raccord de tubes (1) est fabriqué en acier, notamment en acier inoxydable.

10. Système selon l'une quelconque des revendications précédentes, le raccord de tubes (1) comportant une bague d'insertion (94) que l'on peut placer à l'intérieur du raccord de tubes (1), notamment au centre du raccord de tubes (1), entre les faces frontales des conduites (51, 52, 91, 92), sur la face frontale, les conduites (51, 52, 91, 92) se raccordant à partir des deux côtés sur la bague d'insertion (94), l'au moins une sortie d'injection (2, 3, 4) étant placée au moins en partie dans la bague d'insertion (94).

11. Procédé destiné à faire avancer un assemblage de tubes à travers un tunnel, l'assemblage de tubes (50, 90) comportant une première conduite (51,91), une deuxième conduite (52,92) et un raccord de tubes (1), la première conduite (51, 91) étant assemblée par l'intermédiaire du raccord de tubes (1) avec la deuxième conduite (52, 92),
**caractérisé en ce que**
le raccord de tubes (1) comporte au moins une sortie d'injection (2, 3, 4) pour injecter du lubrifiant, le lubrifiant étant injectable de sorte à pouvoir être appliqué sur le raccord de tubes (1) et/ou sur les conduites (51, 52, 91, 92) et l'une sortie d'injection (2, 3, 4) appliquant le lubrifiant sur la face extérieure de la paroi du raccord de tubes et/ou de la conduite.
